# EUROPEAN PATENT APPLICATION

(11) **EP 0 800 069 A1**
(43) Date of publication of application: **08.10.1997**
(21) Application number: 97105263.4
(22) Date of filing: 27.03.1997
(51) Int. Cl.: G01L 1/22, G01L 1/26, G01G 3/14

(54) **Column force transducer**

(30) Priority: 01.04.1996 IT MO960040
(71) Applicant: Societa' Cooperativa Bilanciai - Campogalliano a Responsabilita' Limitata, 41011 Campogalliano (Prov. of Modena) (IT)
(72) Inventor: Secchi, Silvano, 41100 Modena (IT); Diacci, Luciano, 41010 Carpi (Prov. of Modena) (IT)
(74) Representative: Modiano, Guido, Dr.-Ing.

(57) **Abstract**

A column transducer, comprising a body (6) elongated in an axial direction (A), wherein there is a measuring portion (7,7a), having measuring means (8,9; 61,62,63,64;61a,62a,63a,64a;4,45) for measuring the strain induced by the force to be measured, the measuring portion (7,7a) having a section whose width, in a plane which is orthogonal to said axial direction (A), is smaller than that of the section of the body (6) in its other parts, so as to define opposite recesses, with through holes at their longitudinal ends, comprising a tapered portion located at the two ends in the axial direction of each of the recesses, the through holes (60,65) being provided in the area of such tapered portions, leaving a region in between the tapered portions which is deliberately identified by sizes and conformations such that when the measuring means (8,9;61,62;61a,62a;44,45) are located therein and when the body (6) is subjected to the force to be measured, the stress, and therefore the strain, in the axial direction (A,A1) or a direction parallel thereto, in a given position, substantially corresponds to the stress, and therefore the strain, that is generated in a plane (A2) position.

## Description

The present invention relates to a column force transducer.

There are known conventional transducers (EP-A-10105564) consisting of a column element that may be deformed elastically under the action of a tensile, or compressive, force, which elements are associated with strain measuring means adapted for transforming the amount of strain into an electrical signal related to said force.

Examples of measuring means are identifiable in electrical resistance related straingauges, semiconductor related straingauges, piezoelectric-members related straingauges.

From British Patent Application A-2162322 transducers are also known which comprise a body, which extends in an axial direction, wherein there is a measuring portion, having measuring means for measuring the strain induced by the force to be measured, the measuring portion having a section whose width, in a plane which is orthogonal to said axial direction, is smaller than that of the section of said body in its other parts, so as to define opposite recesses with through holes at their longitudinal ends.

Such known transducers are subject to a significant error of non-linearity in the response amounting to approximately 0,1%, which further increases in presence of heavy loads.

Consequently, as a result of such errors, the output electrical signal generated in function of the applied force may deviate from a linear relationship by approximately 0,1%, and even more.

The occurrence of the error of non-linearity is inherent in the elastic response of the assembly formed of the column element and the related strain measuring means, wherein the tensile stress, and therefore also the strain in the elastic range, generated in the direction of the applied force to be measured, is related with the tensile stress, and therefore with the strain, that is generated in a plane which is orthogonal to said direction in function of the Poisson module, which, for example in steel - commonly used for high loads - has a value of approximately 0,3.

This requires the adoption of adapted correcting means, entailing complications in the circuitry of the electrical, or electronic, processing of the signal.

A study on the linearity of column load cells is presented in "Strumentazione per la pesatura e il dosaggio industriali" (Industrial weighing and metering instrumentation), Ed. GISI 1992, pages 68-98 (G. Barbato).

Examples of the use of such correcting means are indicated in EP-A-315846, as well as in the published Italian patent application n. MO94A000076.

From the foregoing the need emerges to solve the technical problem of devising a column force transducer that does not require means for correcting the non-linearity error, deliberately exploiting the fact that it amounts to small entities; a further aspect of the technical problem to be solved is linked to the presence of high loads, for instance of fifty tons or more, which give rise to error increases as to the linear error, including those due to hysteresis.

The invention solves such aspects of said technical problem by devising a column transducer, comprising a body elongated in an axial direction, wherein there is a measuring portion, having measuring means for measuring the strain induced by the force to be measured, the measuring portion having a section whose width, in a plane which is orthogonal to said axial direction, is smaller than that of the section of said body in its other parts, so as to define opposite recesses, with through holes at their longitudinal ends, characterized in that each of said recesses comprises at its two ends in said axial direction a tapered portion and that said through holes are provided in the area of such tapered portions, leaving a region in between the tapered portions which is deliberately identified by sizes and conformations such that, when said measuring means are situated therein and when said body is subjected to the force to be measured, the stress, and therefore the strain, in said axial direction or a direction parallel thereto, in a given position, substantially corresponds to the stress, and therefore the strain, that is generated in a plane which is orthogonal to said axial direction in another position.

The identification of said regions dependent on the given conformations of said recesses and on the sizing of the column.

Some examples of recesses and of relative regions of the straingauges application are provided hereinafter.

In a particularly advantageous embodiment, said column has at least one plane of symmetry, the measuring portion being defined, from opposite sides with respect to said plane, by a pair of opposed recesses wherebetween there is a diaphragm.

Each one of said recesses has a tapered ends portion, for example lozenge, rhomboid or hexagonal, having sides which are longer in said axial direction.

The sides of said lozenge may be straight or even curved.

Said recess has preferably a first plane of symmetry corresponding with or parallel to said axial direction and a second plane of symmetry corresponding with a transverse direction orthogonal to said axial direction.

In a further advantageous embodiment, said diaphragm has a pair of through holes, in a position corresponding with said first plane of symmetry and arranged symmetrically with respect to said second plane of symmetry.

The holes may have a circular shape, but preferably and more conveniently they have a polycentric profile.

The particular shape of the recesses, preferably having holes with said profiles, allows the axial or parallel stresses, and therefore the strains, to be deflected towards the lateral walls of the element, thereby reducing the incidence of these axial stresses and strains or those parallel thereto on the diaphragm; in this way transverse stresses, and corresponding strains, are generated which are comparable to said axial or parallel stresses and strains.

The strain measuring means, i.e. the straingauges in particular, are applied onto said diaphragm.

The measuring means comprise strain measuring means in the axial direction situated in a respective region of said first plane of symmetry, which plane corresponds to intersection with said second plane of symmetry; they, further, comprise measuring means situated in the planes parallel to said axial plane.

The measuring means also comprise transverse strain measuring means, situated in a respective region on the second plane of symmetry at a proper distance from the first plane of symmetry; they also comprise measuring means situated on a plane parallel to said second plane of simmetry.

Said adapted distance is preferably intermediate between the intersection of said first plane of symmetry and the edge of said recess.

A force transducer according to the present invention allows the elimination of the need to provide means for compensating the error of non-linearity; as an alternative, it permits to check such error, be it a positive or negative one, so as to compensate for some possible errors due to other reasons, such as those due to viscous flowing phenomena; furthermore it permits to reduce the hysteresis also under heavy loads.

Some embodiments of the present invention are illustrated, only by way of non-limitative example, in the accompanying drawings, wherein:
Figure 1 is a front partially sectioned side view of a load column;
Figure 2 is vertical section II-II of Figure 1;

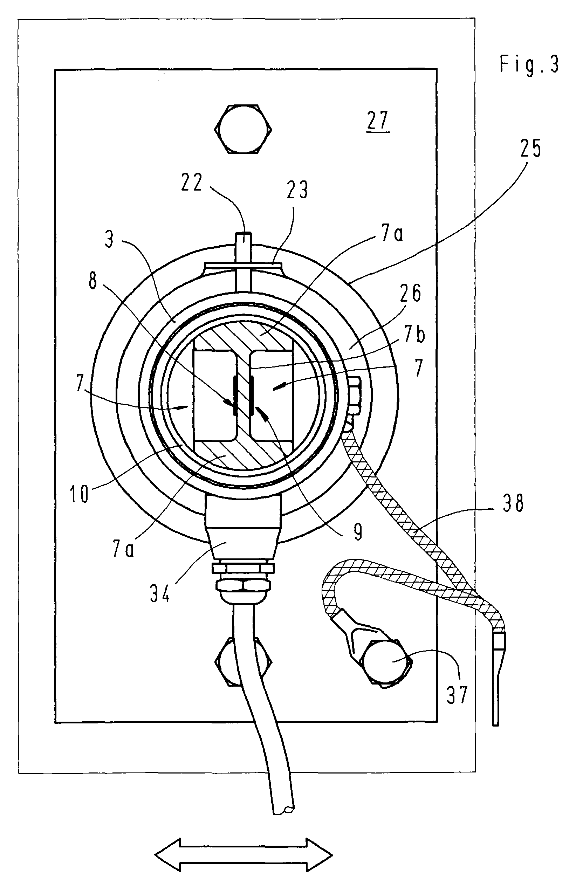

Figure 3 is the cross-section III-III of Figure 2;
Figure 4 is a plan view of a weighing device with four load columns, the weighing platform being supposed to be transparent.
Figure 5 is a section according to line V-V of Figure 4;
Figures 6, 7 are enlarged front views of a symmetrical arrangement of the straingauges on the opposite faces of one diaphragm in a load column;
Figures 8, 9 are views as in Figures 6, 7, with the straingauges arranged in the same way on the faces of said diaphragm;
Figures 10, 11 are views as in Figures 6, 7, but with a different type of straingauge;
Figure 12 is an electrical diagram of a comparison electrical bridge for load columns;
Figure 13 is a side view of a load column, in an embodiment with axial threaded holes for engaging with axial traction elements;
Figure 14 is a view as in Figure 13, but in an embodiment with axial pins with threaded extremities;
Figure 15 is a side view of a load column, in an embodiment with through holes at the ends with parallel axes;
Figure 16 is a section according to line XVI-XVI of Figure 15;
Figure 17 is a front view of a load column, in an embodiment with through holes at the ends with oblique axes, in particular at right angles;
Figure 18 is a section according to line XVIII-XVIII of Figure 17.
Figures 19, 20 are elevation views which are similar to Figures 6, 7, which are particularly convenient for high loads;
Figures 21, 22, 23 and 24 are analogous views, particularly convenient for high loads, when also the advantage of the elimination of the hysteresis is involved.

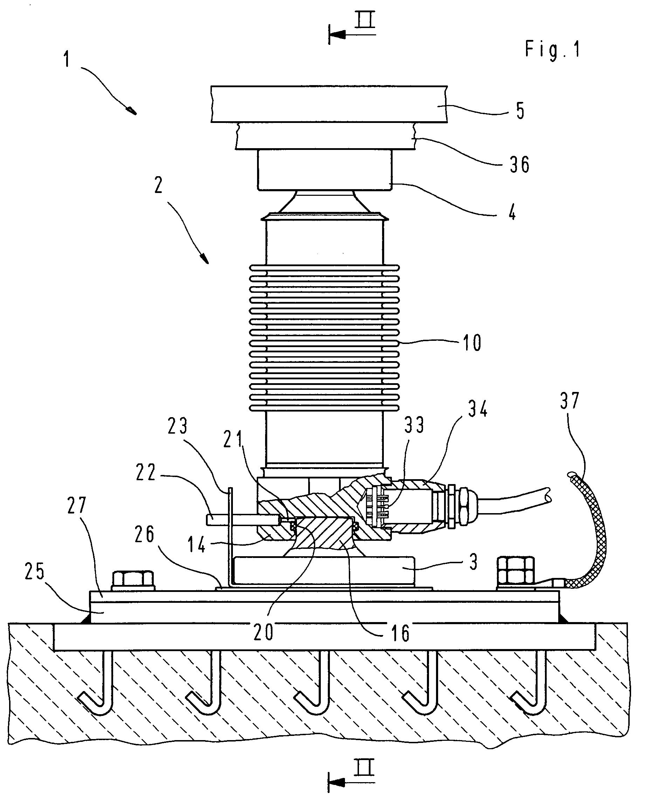

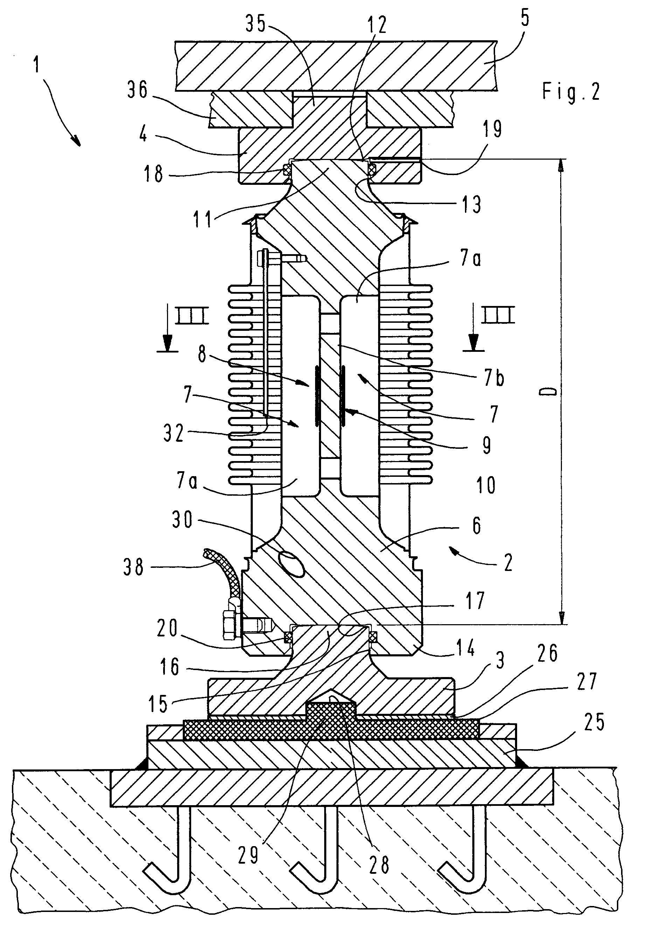

With reference to Figures 1 and 2, a load column 1 comprises an elastically deformable column element 2, positioned between a lower horizontal support 3 and an upper horizontal support 4, whereto a load is applied, for example by means of a platform 5. The column element 2 comprises a body 6 having a pair of central opposed recesses 7 defining a pair of wings 7a and a central diaphragm 7b whereon pairs of means 8, 9 are respectively fixed for measuring strains, in particular in form of straingauges.

The column element 2 is externally provided, in its central part, with a metallic bellows 10 and preferably has a cylindrical upper extremity 11, ending in a spherical cap 12 inserted in a corresponding cylindrical seat 13 of the upper support 4.

The lower extremity 14 of the column element 2 has, at its lower end, a cylindrical seat 15 wherein is inserted a cylindrical shank 16 of the lower support 3 ending in a spherical cap 17.

The sum of the radiuses of curvature of the spherical caps 12 and 17 is preferably greater than the distance D between two parallel planes tangential to said spherical caps. The said radiuses of curvature may be different from one another. In this case, the elastically deformable element 2 constitutes an oscillating self-aligning support of the load platform 5.

This means that, if the elastically deformable element 2 undergoes a movement, when the load to be measured is applied, it automatically returns to its initial position.

A first elastic centering ring 18 forming a seal against the introduction of foreign bodies is positioned between the upper extremity 11 of the elastically deformable element 2 and the cylindrical seat 13 of the upper support 4.

In the upper support 4 there is also a first hole 19 allowing the discharge of excess lubricating grease from the cylindrical seat 13, when the upper extremity 11 of the element 2 is inserted in said seat.

A second elastic centering ring 20 forming a seal against the introduction of foreign matters is positioned between the cylindrical seat 15 of the lower extremity 14 of the element 2 and the shank 16 of the lower support 3.

In said lower extremity 14 there is a second hole 21 for the discharge of excess lubricating grease from the cylindrical seat 15, through an elastic anti-rotation pin 22, when said shank 16 of the lower support 3 is inserted in said seat.

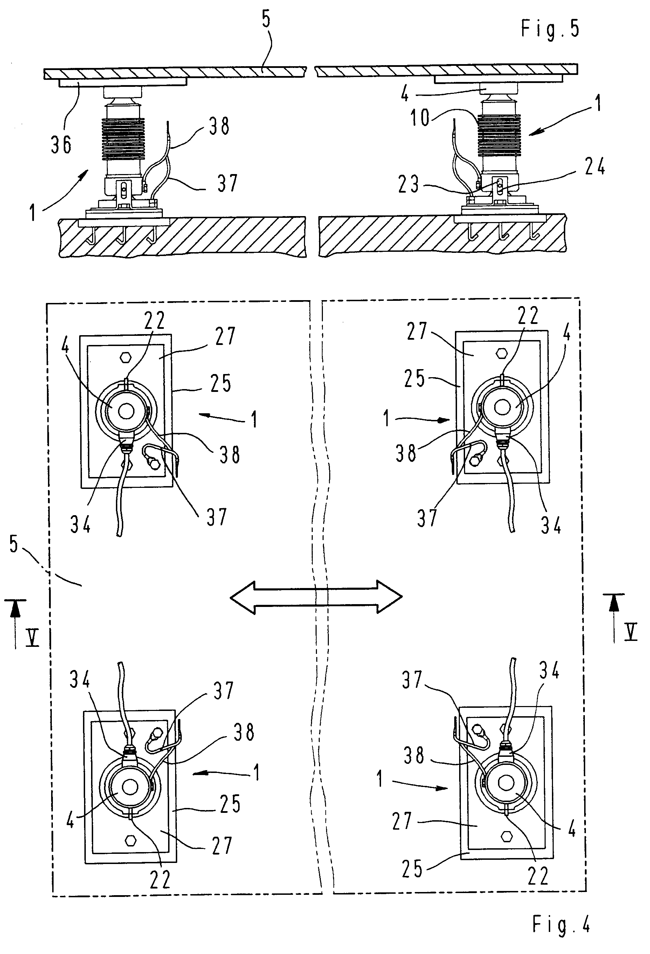

The elastic pin 22 co-operates with an anti-rotation locator element 23, for example, consisting of a plate fixed to the lower support 3 and having a slot 24 (Fig. 5), wherein said elastic pin is inserted.

The lower support 3 lies on a base 25 with interposition of a centering element 26, inserted in a centering seat 27 of the base 25, having a cylindrical projection 28 inserted in a corresponding centering hole 29 of the lower support 3. If the lower support 3 needs to be insulated from the base 25, the centering element 26 is made of an electrically insulating material.

The upper support 4 has a cylindrical shank 35 for centering on a plate 36 positioned between said support and the load platform 5, or for centering directly on the platform 5, or on a load carrying frame.

The body 6 of the column element 2 has holes 30 housing the electrical cables connecting the pairs of straingauges 8, 9 and a printed circuit 32, for example, fixed to the body 6, that forms the electrical comparison bridge, and electrical cables connecting the printed circuit 32 and a terminal block 33, whereto the power supply cable and the output signal cable are connected, said cables being enclosed, for example, in a sheath 34 containing impermeable material. A first conductor 37 is connected to the plate 36 and to the base 25 to discharge to ground any parasitic current, for example, due to atmospheric discharge, to protect the measuring circuit; furthermore, a second conductor 38 is connected to the plate 36 and to the lower extremity 14 of the body 6 to maintain a constant potential between the extremities of the element 2, in order to prevent electrical currents from passing through the element 2, said currents possibly being caused, for example, by electrical atmospheric discharge or by arc welding apparatus used to carry out welds in the vicinity of the element 2.

Figures 4 and 5 show a diagrammatic representation of a weighing device having four load columns 1 arranged at the corners of a platform 5. The load columns 1 are aligned so that the wings 7a are parallel to the direction wherein the transverse components of the forces acting on each load column 1 are most intense, said transverse components being generated by thermal and/or elastic strains of the platform 5, or load carrying frame, or by any yielding in the base of the load columns. This arrangement allows to keep errors of measurement caused by the presence of said transverse components to a minimum, as will be explained hereinafter.

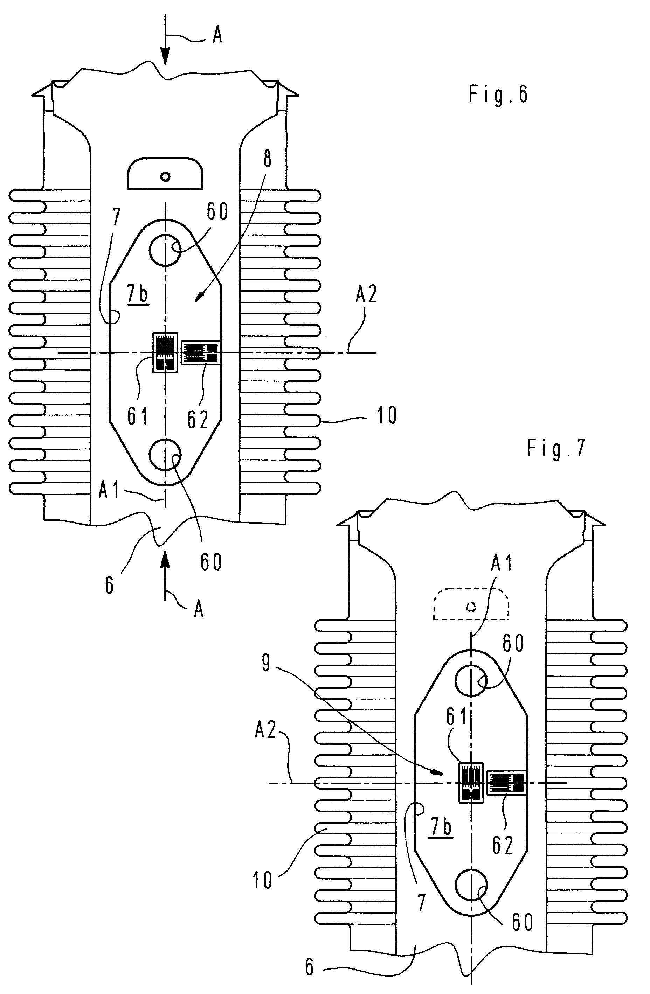

Figures 6 to 11 show the opposite recesses with their tapered shape end portions: possible positioning of the pairs of straingauges inside said recesses 7 are illustrated.

It is to be noted how the diaphragm 7b is advantageously provided with a pair of through holes 60 aligned on a first plane of symmetry A1 of each recess 7.

There may also be a second plane of symmetry A2, orthogonal to the first plane of symmetry A1 and defining with it a region of intersection wherein a first straingauge 61, sensitive to strains in the body 6 in a direction parallel to the main direction A of the stress (Figure 6), is fixed to the diaphragm 7b.

A second straingauge 62, sensitive to strains in a direction perpendicular to said main plane A, may be fixed to the diaphragm 7b in an intermediate region of the second plane of symmetry A2 comprised between said region of intersection and one edge of each recess 7.

With the above-described arrangement of straingauges, the stresses corresponding to the strains along the plane A1 on the surface of the diaphragm 7b are substantially the same as the stresses and therefore as the strains measured along the plane A2 on the surface of said diaphragm. Accordingly the error of non-linearity, does not have an appreciable effect on the measurement.

To compensate for any bending moment caused by the transverse components of the forces, the straingauges of each pair 8, 9 of straingauges have to be positioned as close and symmetrically as possible with respect to the neutral axis of the median section of the body 6 equidistant from the planes tangent to the spherical caps 12 and 17: this reduces the differences in measurement between the two pairs 8, 9 of straingauges resulting from the strains caused by bending moments and by the inevitable errors in the positioning of the straingauges.

Aligning the load columns 1 as above-indicated minimizes the error of positioning of the straingauges thereby reducing the differences in the measurements of each pair of straingauges 8 and 9 to a minimum and therefore maximizing the insensitivity of the load column to the effects of the above mentioned transverse components of the force: in fact, with this arrangement, the neutral plane of bending generated by the transverse components of the forces with greatest intensity acting on the load column, substantially coincides with the vertical plane of symmetry of the diaphragm 7b of the section and, consequently, any errors in the positioning of the straingauges with respect to this plane are at most equal to the dimensional tolerances of said diaphragm.

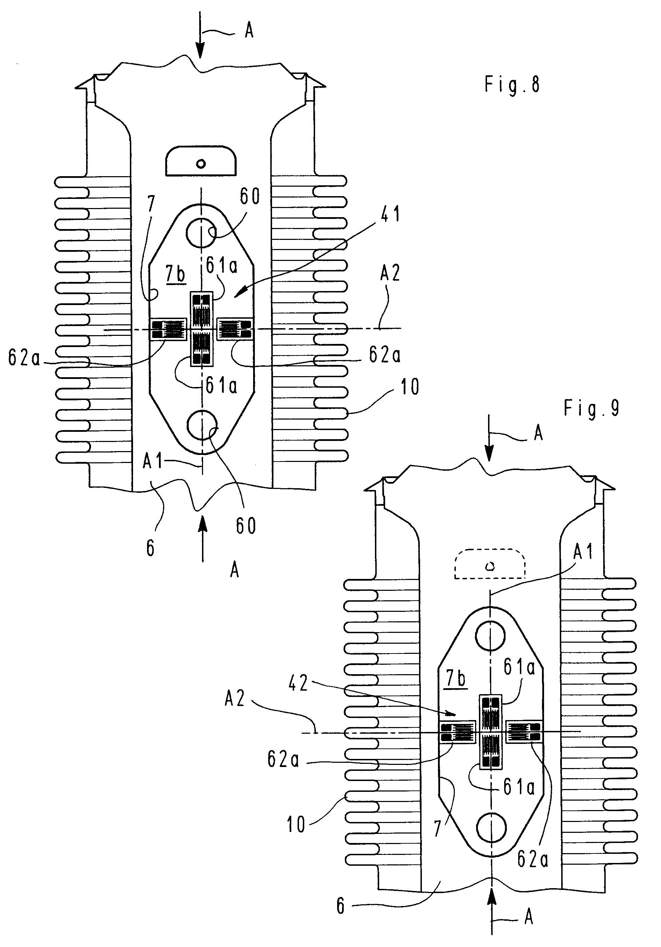

Figures 8 and 9 show two arrangements of pairs of straingauges 41, 42 inserted in the recesses 7, each arrangement comprising a pair of straingauges 61a, situated on the surface of the diaphragm 7b in a position corresponding with plane A1 on symmetrically opposed sides with respect to the intersection with the plane A2, and a pair of straingauges 62a, situated on the surface of the diaphragm in a position corresponding with plane A2 on symmetrically opposed sides with respect to the intersection with the plane A1.

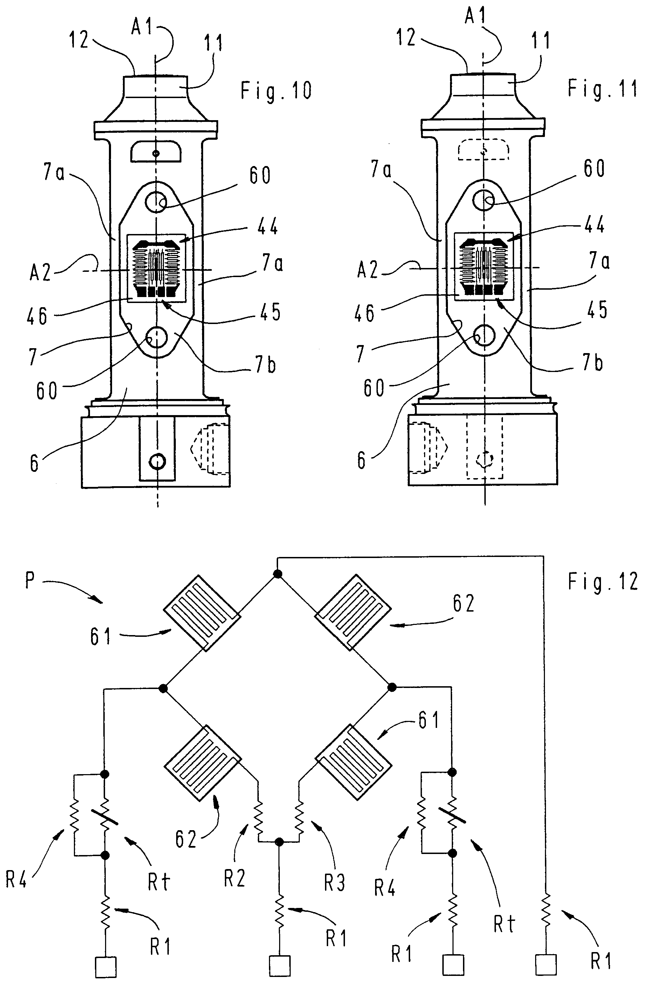

Figures 10 and 11 show two pairs of straingauges 44, 45, each of which is mounted on a single support 46 so as to allow the symmetrical positioning of the straingauges, both with respect to the first plane of symmetry A1 and to the second plane of symmetry A2.

Each pair of straingauges 8, 9, 61, 62, 41, 42, 44, 45 does not need to be associated with any linearizing element, as those which are instead used in prior art load columns.

Figure 12 shows the electrical circuit diagram of the comparison bridge P wherein the pairs of straingauges 8, 9 are arranged on the sides of the bridge, two resistances Rt for compensating the effects of the variations in temperature being arranged on the entry sides of the bridge P. The bridge P also comprises, in series with each entry and exit branch, a resistance R1 for gauging the measurement signal. In parallel with each resistance Rt there is a gauging resistance R4. Finally, on two consecutive sides of the bridge, two resistances R2, R3 are inserted in series for balancing said bridge.

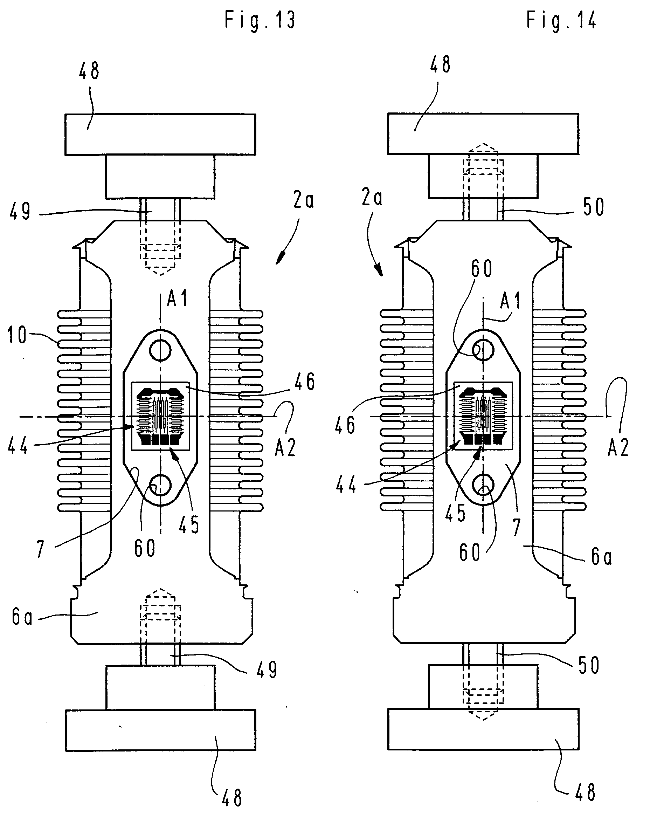

Figure 13 shows a column element 2 having axial traction elements 48, in an embodiment of the load column adapted for measuring tensile loads; the traction elements 48 may be provided with screws 49 engaging in corresponding threaded seats positioned axially on the extremities of the body 6, or with threaded seats for engaging with screws 50 protruding axially from the extremities of said body.

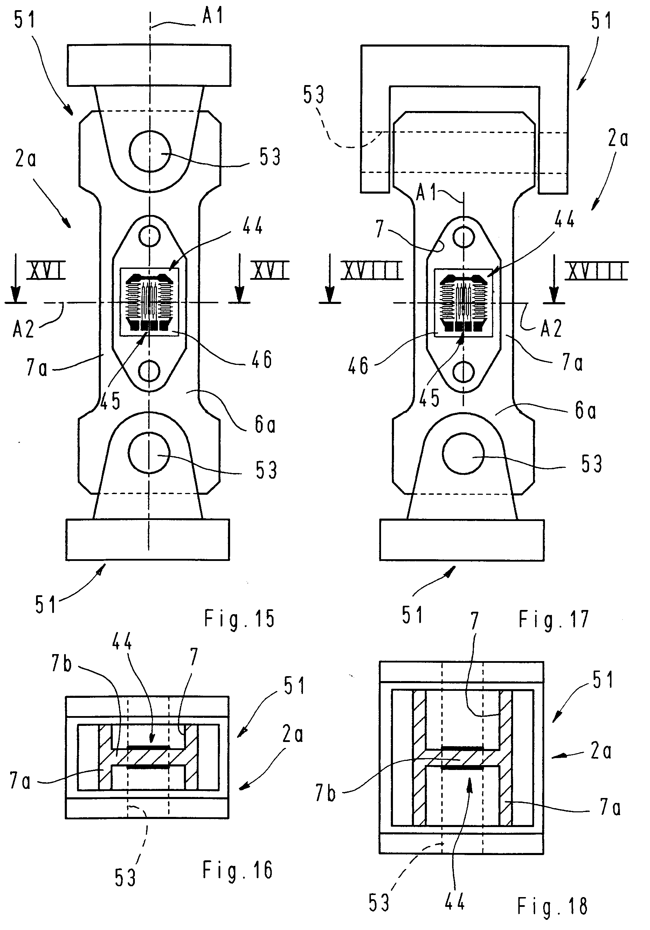

Figures 13 to 18 show another embodiment of the column element 2a having a body 6a which is thinner in the central measuring portion. In particular, as shown in Figures 15 to 18, the extremities of the body 2a may have traction elements with through holes 51 at each extremity of the body of the element 2a, provided with parallel or oblique pins 53.

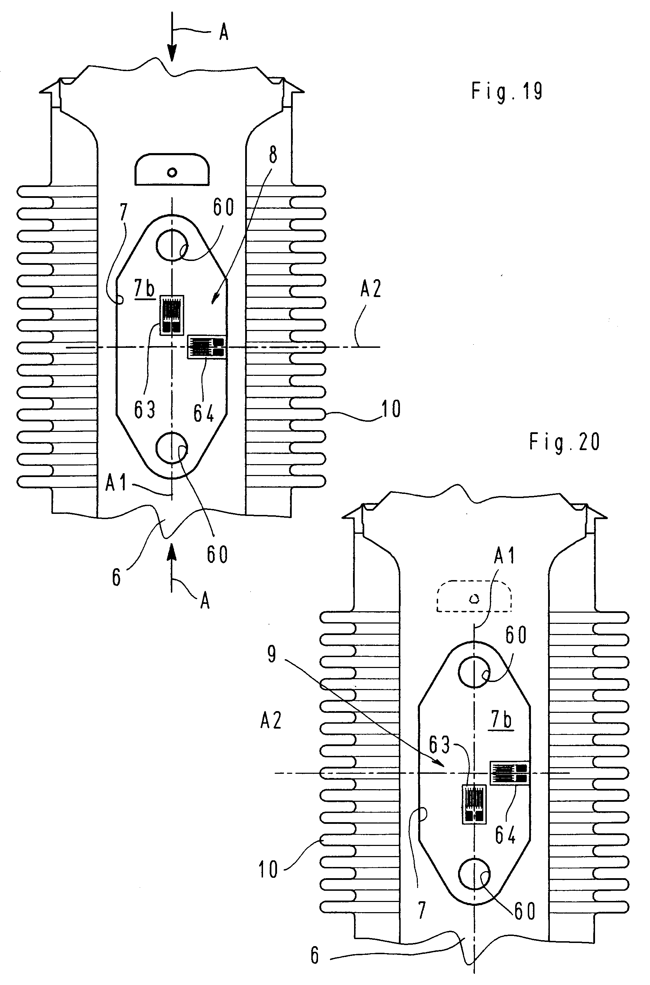

Figures 19, 20 show the axial straingauge 63 in a position which is different from the one where the crossing of the two symmetry planes occur, so that a more accurate control of the non-linearity value can be performed, so that anti-symmetries on the opposite sides of the same diaphragm can be made possible.

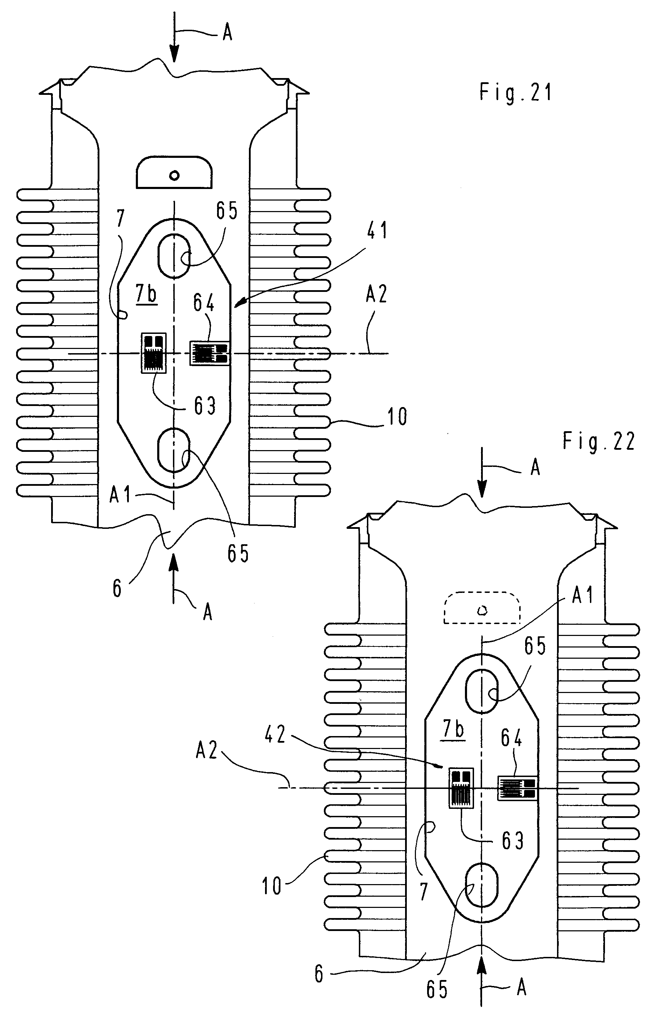

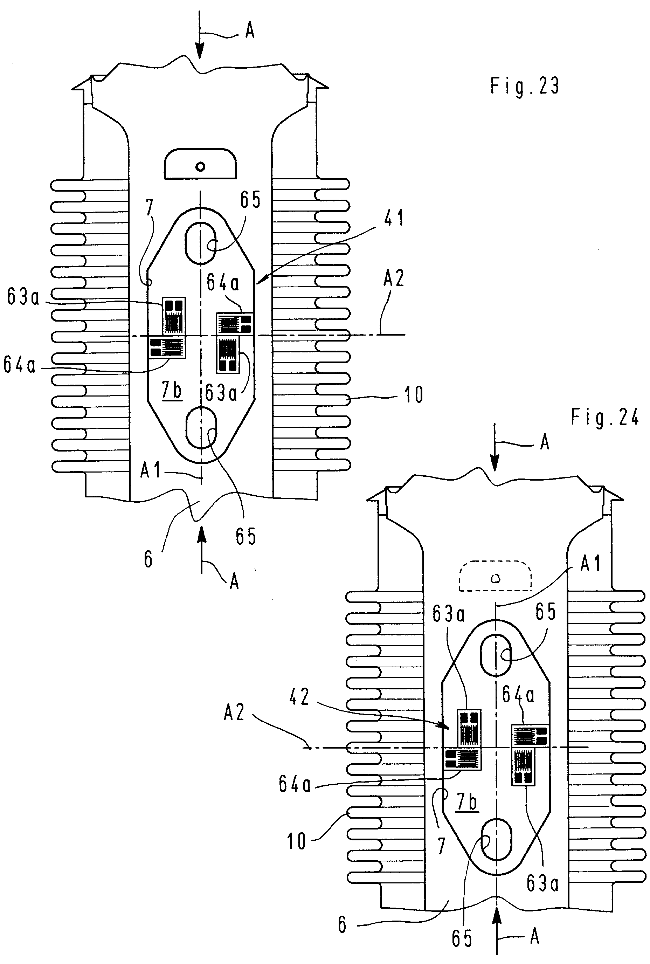

Figures 21, 22, 23 and 24 show further embodiments, in connection with the elongated shapes of the holes 65, which are provided in the diaphragm 7b along the symmetry axis A1, the combination whereof with the geometry of the elements 7 conveniently reduces the problems connected with the loads columns. As for the positions of the straingauges in Figures 23, 24, with 63a are indicated those which are not situated so as to be in intersection with axis A1, and with 64a those not situated so as to be in intersection with axis A2.

The operation of the load column 1 is as follows: when applying a direct compressive or tensile load to the column 1 in the direction A, A1, the body 6 deforms elastically, with strains proportional to the applied load; the main elastic deformation is measured by straingauges 45, 61, 63 which generate an electrical signal proportional to said strain, whereas the secondary deformation is measured by straingauges 44, 62, 64 which generate an electrical signal proportional to said strain.

The electrical signals of the straingauges, measured by the comparison bridge P, are processed by the printed circuit 32 wherefrom one obtains an output signal proportional to the intensity of the load applied to the load column 1.

In practice the materials employed, as well as the dimensions and construction details, may be different from, but technically equivalent to, those described without departing from the scope of the present invention.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A column transducer, comprising a body (6) elongated in an axial direction (A), wherein there is a measuring portion (7), having measuring means (8,9; 61,62,63,64;61a,62a,63a,64a;4,45) for measuring the strain induced by the force to be measured, the measuring portion (7) having a section whose width, in a plane which is orthogonal to said axial direction (A), is smaller than that of the section of said body (6) in its other parts, so as to define opposite recesses (7), with through holes at their longitudinal ends, characterized in that each of said recesses comprises at its two ends in said axial direction a tapered portion, and that said through holes (60,65) are provided in the area of such tapered portions, leaving a region in between the tapered portions which is deliberately identified by sizes and conformations such that when said measuring means (8,9;61,62;61a,62a;44,45) are located therein and when said body (6) is subjected to the force to be measured, the stress, and therefore the strain, in said axial direction (A,A1) or a direction parallel thereto, in a given position, substantially corresponds to the stress, and therefore the strain, that is generated in a plane (A2) which is orthogonal to said axial direction in another position.

2. A column transducer, according to claim 1, wherein said recess (7) has a first plane of symmetry (A1) containing said axial direction (A).

3. A column transducer, according to claim 1, or 2, wherein said recess (7) has a second plane of symmetry (A2), orthogonal to said first plane of symmetry (A1).

4. A column transducer, according to one or more of claims 1 to 3, wherein said recess (7) has a rhomboid shape.

5. A column transducer, according to one or more of claims 1 to 3, wherein said recess (7) has a lozenge shape.

6. A column transducer, according to one or more of claims 1 to 3, wherein said recess (7) is substantially hexagonal in shape with the longer sides parallel to said first plane of symmetry.

7. A column transducer, according to claim 1, wherein said through holes (60,65) are located in a position corresponding with said first plane of symmetry (A1), symmetrically arranged with respect to said second plane of symmetry (A2).

8. A column transducer, according to claim 1, wherein said measuring means (8,9;61,62,63,64;61a,62a,63a,64a;44,45) comprise strains measuring means in the axial direction (61;61a;45) situated in a position of said first plane of symmetry (A1) corresponding with the intersection with said second plane of symmetry (A2).

9. A column transducer, according to claim 1, wherein said measuring means (8,9;61,62,63,64;61a,62a,63a,64a;44,45) comprise strains measuring means in the axial direction (62;62a;44) situated in a respective position on the second plane of symmetry (A2) at a distance from the first plane of symmetry (A1).

10. A column transducer, according to claim 9, wherein said distance is the intermediate distance between the intersection of said first plane of symmetry (A1) and said second plane of symmetry (A2) and the edge of the recess (7).

11. A column transducer according to claim 1, wherein said through holes (65) have a shape which is increased along said axial direction.

12. A column transducer, according to claim 1, wherein said measuring means (8,9;61,62,63,64;61a,62a,63a;44,45) comprise strains measuring means in the axial direction (63;63a) situated in a position parallel to said first plane of symmetry (A1).

13. A column transducer, according to claims 1, 2 and 3, wherein said measuring means (8,9;61,62,63,64; 61a,62a,63a;44,45) comprise strains measuring means in the transversal direction (64,65) situated in a position parallel to said second plane of symmetry (A2).
